# EUROPEAN PATENT APPLICATION

(11) **EP 1 830 253 A2**
(43) Date of publication of application: **05.09.2007**
(21) Application number: 07250432.7
(22) Date of filing: 01.02.2007
(51) Int. Cl.: G06F 9/44

(54) **Method, computer program and apparatus for analysing symbols in a computer system**

(30) Priority: 08.02.2006 US 771281 P
(71) Applicant: Secerno Limited, Oxford Oxfordshire OX2 0JX (GB)
(72) Inventor: Moyle, Stephen Anthony, Oxford OX1 4RU (GB)
(74) Representative: Flint, Adam

(57) **Abstract**

A computer-implemented method of analysing symbols in a computer system, and a computer program and apparatus therefor are provided. The symbols conform to a specification for the symbols. The specification is codified into a set of computer-readable rules. The symbols are analysed using the computer-readable rules to obtains patterns of the symbols by: determining the path that is taken by the symbols through the rules that successfully terminates, and grouping the symbols according to said paths.

## Description

The present invention relates to a method, a computer program and apparatus for analysing symbols in a computer system.

There are many examples of computer systems in which it is useful to be able to analyse symbols passing through or stored in the computer system. As will be appreciated from the following, the term "symbols" in this context is to be construed broadly. In general, the term "symbols" is used herein in the broad sense as used in the field of Universal Turing Machines. For example, "symbols" includes computer messages, which term is also to be construed broadly and includes for example computer messages in a computer language (including computer instructions, such as executable programs), natural languages in computer-readable form (such as in documents, emails, etc.). "Symbols" also includes computer data in the conventional sense, i.e., typically, abstractions of real world artefacts, etc.

In one example of computer systems in which it is useful to be able to analyse symbols passing through or stored in the computer system, third parties can attempt to take control of a computer by "hacking" the computer system. Such hacking can be carried out by exploiting the well known buffer overflow weaknesses of some computer operating systems. In another example, hacking can take place by the third party sending commands to the computer system in which the commands are correctly structured in the context of the language of the computer system, but which are intended to cause the computer system to return an error message that can be used by the third party to gain illegal access to the computer system. Attacks of this type on SQL databases are well known and yet are difficult to defend against. SQL databases are widely used, and are used for example by e-commerce and many other websites to hold user data (such as login name and password, address and credit card details, etc.).

In another example, it may be desirable to monitor computer symbols or messages to ensure that the computer system is being used properly and that for example it is not being used inappropriately. For example, in an organisation, a user may be using a computer system inappropriately, for example by using the system for purposes for which the user is not authorised, and yet which is not intended by the user to be an "attack" on the computer system as such.

Known measures to prevent such inappropriate use of the computer system include the use of firewalls, virus scanning software and intrusion detection systems.

Firewalls are effective but have many limitations. For example, in e-commerce or the like, it is inevitable that third parties must have access to a web server so that for example the third parties can enter login and password details and obtain appropriate responses from the server. In such cases, the firewall must allow users access to the computer system.

Virus scanning software is again effective, but only in respect of viruses that are already known or that have signatures that are similar to known viruses. This is because virus checkers typically monitor files to look for "signatures", i.e. known strings of bytes, which are stored in a library. In other words, virus checkers look for syntax (e.g. strings of bytes in a file) and not semantics (i.e. the content and meaning of a message or file).

Intrusion detection systems are becoming increasingly effective. However, typically these operate by analysing computer messages to determine whether they fit a set of known rules that are deemed to apply to messages that are to be accepted. A problem with this approach arises in the generation of the rules and when the system faces a new message that has not been seen previously. In WO-A-2003/090046, an intrusion detection system is disclosed that uses inductive logic programming to generate new rules for new messages so as to update the knowledge base of the intrusion detection system. Another example of a system that is similar in concept, though different in detail, is disclosed in US-B-6311278.

A problem with these known intrusion detection systems that effectively generate new rules, which allow the system to determine whether or not to accept the message, is that the time taken to generate the new rules is generally prohibitive. For example, even a modest e-commerce site can process 10,000 SQL statements per minute. It is not possible for these known detection systems to handle that amount of traffic in a reasonable time. It will be understood that any significant delay for a user in accessing an e-commerce site will generally not be acceptable to the user, who will typically require access within seconds of attempting to log in to a website. Similarly, within for example an organisation, users will not accept any significant delays in processing their traffic across the network.

There are also many applications where it would be useful to be able to analyse computer symbols, including for example data, into patterns that can be recognised by humans.

According to a first aspect of the present invention, there is provided a computer-implemented method of analysing symbols in a computer system, the symbols conforming to a specification for the symbols, the method comprising: codifying the specification into a set of computer-readable rules; and, analysing the symbols using the computer-readable rules to obtains patterns of the symbols by: determining the path that is taken by the symbols through the rules that successfully terminates, and grouping the symbols according to said paths.

As mentioned above, "symbols" in this context is to be construed broadly. In general, the term "symbols" is used herein in the broad sense as used in the field of Universal Turing Machines. For example, "symbols" includes computer messages, which term is also to be construed broadly and includes for example computer messages in a computer language (including computer instructions, such as executable programs), natural languages in computer-readable form (such as in documents, emails, etc.). "Symbols" also includes computer data in the conventional sense, i.e., typically, abstractions of real world artefacts, etc.

By analysing the symbols into patterns, new symbols can be analysed more efficiently than in prior art techniques, which makes it possible to implement the method in real-time with relatively little computational overhead.

In an embodiment, the method is carried out on new symbols to determine whether the new symbols fit a pattern of data that is known or constitute a new pattern. In practice, if the new symbols fit a pattern that is known, then a decision will already have been made as to whether symbols fitting that known pattern are to be deemed acceptable or not. If the symbols constitute a new pattern, in practice a decision will have been made what to do with symbols that constitute a new pattern, such as "always deem not acceptable" or "send error report", etc.

In an embodiment, the method is initially carried out on training examples of symbols. This allows a base set of patterns of symbols to be built up. These can be analysed by a human domain expert who can determine which patterns relate to acceptable or normal behaviour, so that new symbols can be classified accordingly. In principle, the training examples may be examples of symbols that are known to be acceptable thereby to obtain patterns of symbols that are known to be acceptable. However, more likely in practice is that the training examples will be general and a decision will be made later, after the patterns have been produced and based on the patterns, as to which patterns are to be deemed acceptable or not.

In an embodiment, it is determined to be sufficient to take only a single said path that successfully terminates. As will be explained further below, this improves the efficiency of the method.

In a preferred embodiment, the specification is codified by defining a first order logic that describes the specification; and, the symbols are analysed using the first order logic to obtain patterns of the symbols by:
determining the symbols that is taken by each symbol through the first order logic that successfully terminates, and grouping the symbols according to said paths.

The use of first order logic provides for a particularly efficient method and one that is comparatively easy to implement.

In a preferred embodiment, the first order logic has clauses at least some of which are parameterised. In other words, some of the clauses have labels applied thereto, the labels relating to the probability of the clause being "true" in the context of the system in which the symbols are passing.

Preferably, at least some of the clauses have a head that is parameterised, the determining step in the analysing step being carried out by determining a path of clauses having a parameterised head through the first order logic that is taken by each symbol that successfully terminates. As will be explained further below, this improves the efficiency of the method.

In a most preferred embodiment, the first order logic is a stochastic logic program having at least some clauses that are instrumented, the determining step in the analysing step being carried out by determining a path of said instrumented clauses through the first order logic that is taken by each symbol that successfully terminates.

In another embodiment, the specification is codified into a Java program; and, the symbols are analysed using the Java program to obtain patterns of the symbols by:
determining the execution path that is taken by each symbol through the Java program that successfully terminates, and grouping the symbols according to said execution paths.

In an embodiment, the symbols are messages of a computer language, said specification being the computer language, and wherein the codifying the specification into a set of computer-readable rules comprises defining computer-readable rules that describe the grammar of the computer language.

In another embodiment, the symbols are data.

In an embodiment, the method comprises generalising the symbols by generalising to the paths. This allows generalisation to be tractable.

According to a second aspect of the present invention, there is provided a computer program for analysing symbols in a computer system, the symbols conforming to a specification for the symbols, the computer program comprising program instructions for causing a computer to carry out a method of: codifying the specification into a set of computer-readable rules; and, analysing the symbols using the computer-readable rules to obtains patterns of the symbols by: determining the path that is taken by the symbols through the rules that successfully terminates, and grouping the symbols according to said paths.

There may also be provided a computer programmed to carry out a method as described above.

Embodiments of the present invention will now be described by way of example with reference to the accompanying drawings, in which:
Fig. 1 shows an example of a cluster obtained in accordance with an embodiment of the present invention;
Fig. 2 shows a cluster as portrayed by its annotated parse tree;
Fig. 3 shows a cluster as portrayed graphically by way of a parse map; and,
Fig. 4 shows another example of portrayal of clusters.

In the immediately following specific description, reference will be made principally to computer messages written in a computer language, and to the use of first order logic including stochastic logic programs in particular. However, as will be appreciated from the foregoing and as explained further below, the symbols that are analysed can in general be of any type that conforms to a specification and that techniques other than first order logic may be applied.

In a computer system, messages are used to specify the desired operational behaviour of components in the computer system. Thus, messages are used between components within the computer system, and messages are used by users to gain access to the computer system. High level or "scripting" languages are used to facilitate the use of messages in a computer system. The computer language is defined by a grammar so that messages conform to a known syntax. The grammar of such languages is published so that software developers can ensure that the messages of the software conform to the correct syntax. By way of example only, the syntax for the SQL language is published as an ISO standard.

The preferred embodiments of the present invention operate by analysing new messages to determine whether they fit a pattern of messages that is deemed to be acceptable. In this context, a message is "new" if it has not been seen by the system previously.

In contrast to the prior art briefly discussed above, the preferred embodiments are not concerned with generating new rules for new messages, and instead, as stated, are concerned with determining patterns for computer messages. The patterns that are obtained can then be considered, for example "manually" by a human user, to determine whether a computer system has been compromised. Alternatively, the patterns can be automatically analysed by a computer-implemented method, so that messages can be accepted or rejected, preferably effectively in real time and therefore "on the fly".

In the preferred embodiment, the grammar of the computer language of the messages that are to be analysed is defined using first order logic. This may be carried out in a manner that is known per se. For example, the programming language Prolog can be used to describe the grammar of the language as a set of first order logic. This logic is then applied initially to a set of training examples of messages. Such messages are defined so as to be correct syntactically in the context of the language and appropriate in the sense that they are messages that are deemed to be acceptable in the context of usage of the system around which the messages pass. The logic contains clauses. When the logic is applied to the messages, the identity of the clauses along a successful path is noted. In this way, paths of acceptable messages through the logic are obtained. These paths can then be grouped according to similarity. In turn, the messages that follow the respective paths can be grouped according to similarity in this sense, so that patterns of similar messages can be discerned. This means that new messages, which are different from messages used in the training, can then be allocated to patterns of messages that are known to be acceptable, or rejected.

In the preferred embodiment, some of the clauses of the program logic are annotated with probabilities of the clauses being true in the context of the messages in the computer system. By appropriate labelling of these annotated clauses, a very efficient system for analysing the messages into patterns can be obtained. The preferred embodiment uses logic in the form of a stochastic logic program.

In general, for an arbitrary stochastic logic program, it is non-trivial to calculate the correct labels to be applied to the clauses based on the program and a set of training examples. For example, a naive way to build up the labels on the clauses in the stochastic logic program is to count every time that each clause "fires" (i.e. the clause is determined to be "true") when applying the training examples. There are however two immediate problems with this simple approach. First, it may be that there are several "successful" paths through the logic when applying the logic to a particular example, which can cause multiple counting of the same clauses and/or undercounting of the same clauses. Secondly, clauses will still fire and therefore be counted even when the final derivation of the goal along a path of clauses fails. Whilst techniques are available for minimising these problems, this naive method is still nevertheless computationally intensive and therefore cannot successfully be used in practice.

Before discussing a specific example of an embodiment of the present invention in more detail, a more formal discussion of some aspects of the preferred embodiment will now be given.

A logic program P is a conjunction of universally quantified clauses C₁,...,Cₙ. Each clause is a disjunction of literals Lₖ. A goal G is a disjunction of negative literals ← G₁,...,Gₘ. A definite clause is a clause with at most one positive literal (which is known as the head). A definite logic program contains only definite clauses. All clauses in a logic program with heads having the same predicate name and arity make up the definition of the clause.

A stochastic logic program (SLP) is a definite logic program where some of the clauses are parameterised with non-negative numbers. In other words, an SLP is a logic program that has been annotated with parameters (or labels). A pure SLP is an SLP where all clauses have parameters, as opposed to an impure SLP where not all clauses have parameters. A normalised SLP is one where parameters for clauses that share the same head predicate symbol and arity sum to one. If this is not the case, then it is an unnormalised SLP.

As will be understood from the following more detailed description, the preferred embodiments can be regarded as a parser that is a non-normalised stochastic logic program, i.e. only a subset of the definitions or "clauses" have parameters, and the parameters for any definition do not sum to one.

As has been mentioned, typical approaches to fitting an SLP to a group of examples call each example in the presence of the SLP. Each time a parameterised clause is called, its firing count is incremented. Once all of the examples have been processed, the firing counts for a definition are then summed and the labels that are given to the clauses are normalised versions of the firing counts. However, again as mentioned, the runtime overhead of keeping track of the parameterised definitions is significant, particularly given the problem of what to do when the firing clauses do not lead to a successful derivation for the example. This is overcome in the preferred embodiment by making the assumption that only single success paths are important in accepting a particular message. This means that only the first successful derivation path through the SLP needs to be recorded. It is not necessary to take into account any other or all other successful derivation paths when calculating the parameters to be applied to the clauses of the SLP. This assumption of using single success paths through the SLP contributes to making the method more efficient. Taking only a single (the first) success path is sufficient in the present context because the principal purpose is to cluster the messages with respect to the grammar.

Another contributor to the efficiency of the preferred embodiment is the use of so-called instrumentation. In particular, the heads of certain clauses are parameterised, which is referred to herein as "instrumented". This can be performed at compile time. In an example, each clause that is part of a definition to be labelled is expanded at compile time, and an additional instrumentation literal slp_cc/1 is placed immediately after the head of the clause.

For example the clause p(X) . :- r(X) . will be compiled to p(X) . slp_cc(5), r(X) . say (where it is the fifth clause to be instrumented by the compiler).

A relevant compiler code snippet is shown below:

```
 slp_clause (File, '$source_location'(File, Line):Clause) :-
     slp_clause(File, Line, Label, Clause0),
     expand_term(Clause0, Clausel),
     gen_cid(File, N),
     assert_label(Label, N, File),
     (  Clause1 = (Head :- Body0)
     -> Clause = (Head slp_cc(N), Body),
        slp_body(Body0, Body, File)
     ;  Clause = (Clause1 :- slp_cc(N)),
        Clause1 = Head
     ),
     general_term(Head, Def),
     assert (cid_def (N, File, Def)).
```

Data structures for keeping track of compiled clauses, their modules, and the context in which they are being utilised are initialised by the compiler.

The main objective of the system is to collect the sequence of all instrumented predicates that were used in the successful derivation of a goal G. Any nondeterministic predicates that were tried and failed in the process are ignored: only the first successful derivation is used in accordance with the assumption discussed above (though backtracking is not prohibited by the methods described herein).

The preferred runtime system makes use of extensions to the standard Prolog system called global variables. These are efficient associations between names (or "atoms") and terms. The value lives on the Prolog (global) stack, which implies that lookup time is independent of the size of the term. The global variables support both global assignment (using nb_setval/2) and backtrackable assignment using (b_setval/2). It is the backtrackable assignment of global variables that are most useful for the present preferred runtime system.

The runtime system with the instrumentation works as follows. When a goal G is called using slp_call/1, a global variable slp_path is created to store the sequence of successful instrumented predicates. When an instrumentation literal slp_cc/1 is called, the path so far is retrieved from the global variable slp_path to which the clause identifier is added before the slp_path is updated. All of these assignments are backtrackable should any subsequent sub-goal fail.

An example of the kernel of the runtime system is shown below:

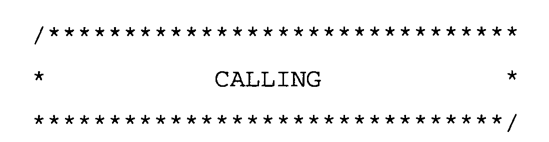

```
 % slp_call(:Goal, -Path)
 
 slp_call(Goal, Path) :-
     b_setval(slp_path, []),
     Goal,
     B_getval(slp_path, Path) .
```

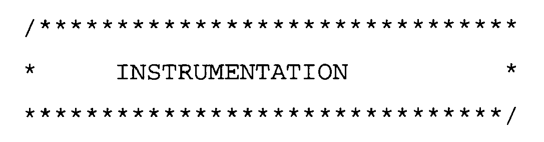

```
 slp_cc(Clause). :-
     b_getval(slp_path, PO),
     b_setval(slp_path, [Clause|p0]).
 
 Slp_id(SetID, IdentifierValue) . :-
     b_getval(slp_path, P0),
     b_setval(slp_path, [id(SetID, IdentifierValue)|P0]).
     (The slp_identifier/2 literal will be discussed
 below.)
```

For example, consider a parser in accordance with a preferred embodiment of the present invention that is written to accept SQL statements as a Prolog module sql. The SQL grammar as published has several hundred clausal definitions. In one example of the preferred method, the following eleven clausal definitions of the SQL grammar are defined (by a human operator) as being worthy of instrumenting:

```
 :- slp
     select_list//0,
     derived_column//0,
     join//0,
     expression//0,
     query_specification//0,
     derived_column//0,
     set_quantifier//0,
     column_name_list//0,
     expression_list//0,
     show_info//0,
     cmp//0.
```

The SLP can be used to determine the path of the derivation of the parse of a message in the following manner:

```
 ?- slp_call(parse(
                "select * from anonData where anonID =
                'nX19LR9P' "
                ), Path).
 Path = [21, 26, 17, 20, 19, 13, 12, 4]
```

The numbers returned in the path sequence are the identifiers of the clauses for the instrumented predicate (given in reverse order). In other words, by applying the SLP parser to the message, the identity of the clauses along the successful path through the SLP parser can be obtained (and are written to the variable "Path"). This allows the path to be clustered with other similar paths. During training time, when the messages to which the system is applied are training examples, this "clusters" the messages into groups or sets of syntactically similar messages, irrespective of the semantics or content of the messages. (It will be understood that the patterns or clusters of any particular example will depend on the precise training examples that are given to the system during the training period and the instrumentation given to the program during compile time.) During runtime, messages are similarly analysed and effectively allocated to the patterns obtained during the training stage at training time. Significantly in the present context, even new messages, which literally have not been seen by the system previously, are allocated to the patterns obtained during the training stage. Thus, this provides the important feature of analysing messages in the computer system into patterns, even if the messages are new.

In a practical example, the overhead of the instrumentation on the runtime system has been found to be low compared with prior art approaches.

One weakness of associating normalised firing counts with probability distributions is that of "contextualisation". A good "fit" of probabilities would be when the observed path frequencies match that of the so-called Markov chain probabilities of the path, where this is calculated by the product of the observed individual clause labels in a path. For example, consider a parser with a "terminal" that is an integer, that is being used in accepting log items from syslog that records DHCPD messages. (A terminal symbol is a symbol that actually occurs in the language concerned.) The integer terminal could appear in any of the date, time, and IP address portions of the messages, all of which in general end in an integer. It has been found that the fit between firing counts and calculated Markov chain distribution is poor in such circumstances where instrumented terminals belong to different contexts. It has also been found that the Markov chain probabilities fit the observed path probabilities in situations where there are no such context ambiguities. The context of the particular terminal is "lost".

To at least partially remedy these effects, the preferred embodiment uses set identifiers. These are terms that are defined to belong to a particular set.

For example, consider a portion of an SQL parser (written as a Definite Clause Grammar or DCG) where it is determined that elements of the sets "table" and "column" are of interest. The slp_identifier/2 literal specifies the set name (either "table" or "column" in this case), and the value to associate with the set.

```
 table_name -->
      [ delimited(TName), period, delimited(CName) ],
      { concat_atom([TName, '.', CName], Name),
       slp_identifier(table, Name) }
      !.
 
 table_name -->
      [ identifier(Name) ],
      { slp_identifier(table , Name) }.
 
 column_name -->
      [ identifier(Name) ],
      { slp_identifier(column, Name) }.
```

In the same manner as clause paths are generated using firing clauses as described above, such paths are augmented with their set name-value pair when set identifiers are used. The runtime system for this again uses backtrackable global variables to keep track of the set name-value pairs for successful derivations. (The use of a slp_identifier/2 literal is shown in the example of the kernel of the runtime system given above.)

If the previous SQL example is run again but with the slp_identifiers above installed, the following is obtained:

```
 ?- slp_call(
     parse(
     "select * from anonData where anonID = 'nX19LR9P' "
     ), Path).
 
 Path =
      [21, 26, id(3, anonID), 17, 20, 19, id(2, anonData),
     13, 12, 4]
```

The element id(3, anonID) says set number 3 (corresponding to items of type "column") contains the value anonID.

It will be understood that the clause paths that are obtained represent a form of generalisation from the training examples. From a textual parsing perspective, this provides a mapping from a string of ASCII characters to tokens and, with respect to a background-instrumented parser, a mapping to clause paths. In the preferred embodiment, the clause paths may include SLP identifier set name-value pairs as discussed above. Each clause identifier maps to a predicate name/arity. In this sense, a predicate is a family of clauses. A clause path can be mapped to a variable "predicate path".

Given that the raw messages are reduced to sequences in the preferred embodiment, it is then possible to perform traditional generalisation techniques more efficiently because it is possible to generalise to the paths rather than to the whole Prolog program that describes the computer language. For example, the known "least general generalisations" method according to Plotkin can be used. Given that in the preferred embodiment the messages are represented as simple "atoms", the least general generalisations can be carried out in a time that is proportional to the length of the sequence. In general, the maximum time required to carry out this known least general generalisation is proportional to the maximum sequence length and the number of examples.

In summary, the preferred embodiments allow messages to be analysed to cluster the messages into patterns. A human domain expert can then inspect the clusters to decide which are to be regarded as "normal" and therefore acceptable, and which are to be regarded as "abnormal" and therefore not acceptable.

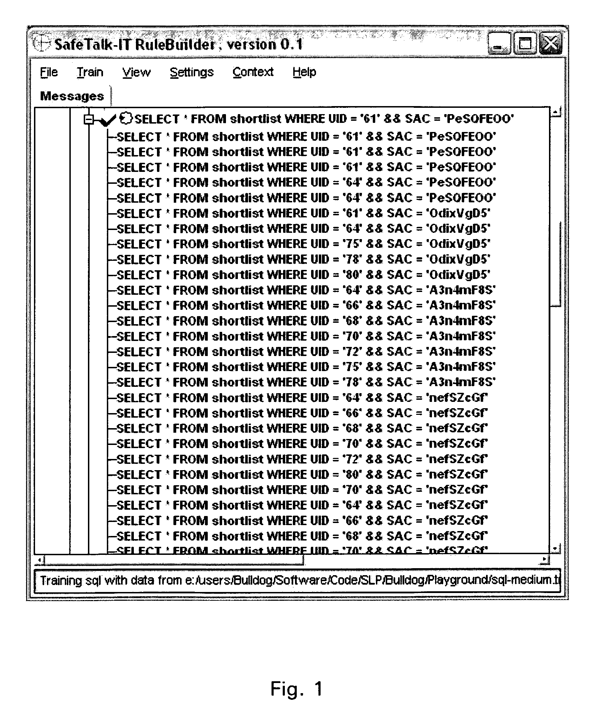

To simplify this analysis by humans, and given that the cluster paths are not particularly understandable to humans, the clusters can be portrayed with a single exemplar, and the user given the ability to drill down into the examples that belong to the cluster. This has been shown to communicate the cluster and its properties effectively to human users. An example of this is shown in Figure 1 where a cluster is portrayed by an exemplar (at the head of the list), with further examples belonging to the cluster being shown below.

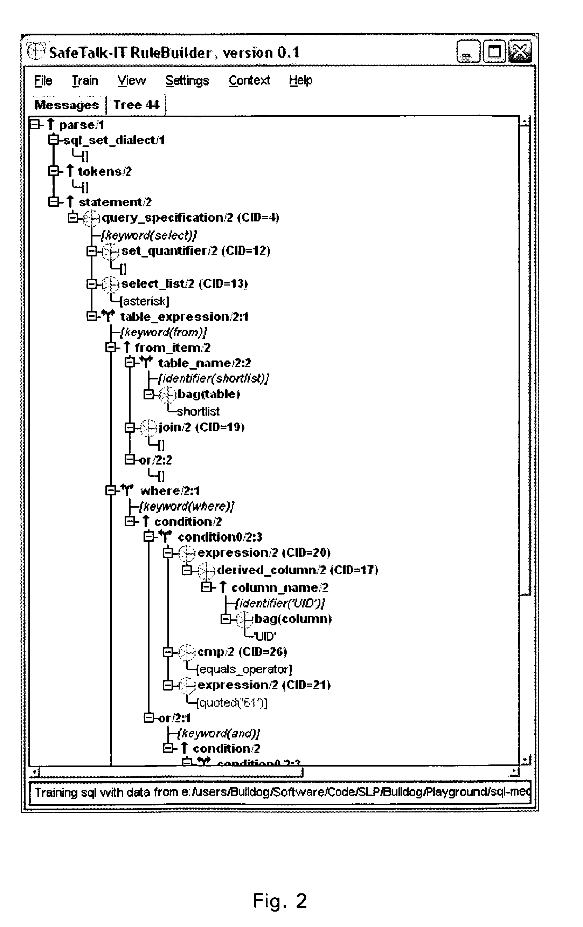

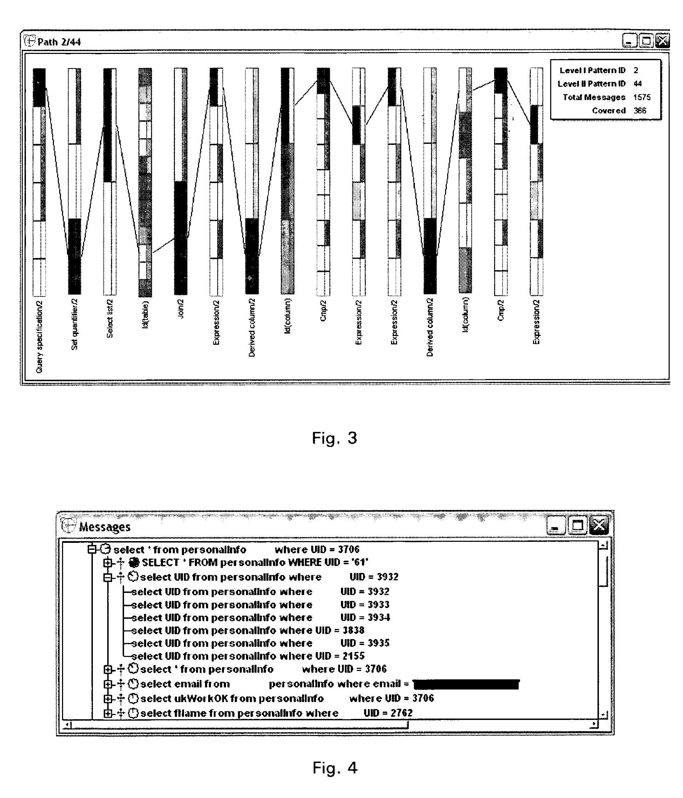

The paths behind the clusters can also be shown to users. For example, Figure 2 shows a cluster as portrayed by its annotated parse tree. In another example, the paths behind the clusters can be shown graphically by way of a parse map, an example of which is shown in Figure 3.

It is possible to extend the mappings described above, particularly the use of set identifiers for contextualisation. For example, generalisations of interesting or key predicates can be defined. To illustrate this, the example given below considers how query specifications interact with particular tables:

```
      :- classify
         query_specification//0,
         id(table).
```

The result of this is shown in Figure 4, where the different access methods to the table called "Personal Info" are shown in their clusters.

In summary, given the language or similar definition of the specification for the data, the preferred embodiments initially use training examples to cluster computer messages or other data into groups of the same or similar type. New messages can then be clustered to determine whether they fit one of the patterns. A human expert will decide which of the patterns are regarded as normal and which are abnormal. In an intrusion detection or prevention system, this can then be used to accept or reject new messages accordingly. In another example, the message analysis can be used to build models of normal usage behaviour in a computer system. This can be used to audit past behaviour, as well as to provide active filters to only allow messages into and out of the system that conform to the defined model of normality. The techniques can be applied to obtain patterns from any type of data that conforms to a known specification. This includes for example data such as financial data, including data relating to financial transaction, which allows models of usage patterns to be obtained; so-called bioinformatics (e.g. for clustering sub-sequences of DNA); natural language messages, which can be used in many applications, e.g. the techniques can be used to form a "spam" filter for filtering unwanted emails, or for language education; design patterns for computer programs, engineering drawings, etc.

The use of stochastic logic programs that are instrumented as described herein for the preferred embodiments leads to very efficient operation, making real time operation of the system possible with only minimum overhead. However, as mentioned, other techniques are available.

It will be understood that the methods described herein will typically be carried out by appropriate software running on appropriate computer equipment. The term "computer" is to be construed broadly. The term "a computer" or similar may include several distributed discrete computing devices or components thereof. The computer program may be in the form of source code, object code, a code intermediate source and object code such as in partially compiled form, or in any other form suitable for use in the implementation of the processes according to the invention. The carrier be any entity or device capable of carrying the program. For example, the carrier may comprise a storage medium, such as a ROM, for example a CD ROM or a semiconductor ROM, or a magnetic recording medium, for example a floppy disk or hard disk. Further, the carrier may be a transmissible carrier such as an electrical or optical signal which may be conveyed via electrical or optical cable or by radio or other means.

Embodiments of the present invention have been described with particular reference to the examples illustrated. However, it will be appreciated that variations and modifications may be made to the examples described within the scope of the present invention.

## Claims

1. A computer-implemented method of analysing symbols in a computer system, the symbols conforming to a specification for the symbols, the method comprising:
codifying the specification into a set of computer-readable rules; and,
analysing the symbols using the computer-readable rules to obtains patterns of the symbols by:
determining the path that is taken by the symbols through the rules that successfully terminates, and
grouping the symbols according to said paths.

2. A method according to claim 1, wherein the method is carried out on new symbols to determine whether the new symbols fit a pattern of symbols that is known or constitute a new pattern.

3. A method according to claim 1 or claim 2, wherein the method is initially carried out on training examples of symbols.

4. A method according to any of claims 1 to 3, wherein it is determined to be sufficient to take only a single said path that successfully terminates.

5. A method according to any of claims 1 to 4, wherein:
the specification is codified by defining a first order logic that describes the specification; and,
the symbols are analysed using the first order logic to obtain patterns of the symbols by:
determining the path that is taken by each symbol through the first order logic that successfully terminates, and
grouping the symbols according to said paths.

6. A method according to claim 5, wherein the first order logic has clauses at least some of which are parameterised.

7. A method according to claim 6, wherein at least some of the clauses have a head that is parameterised, the determining step in the analysing step being carried out by determining a path of clauses having a parameterised head through the first order logic that is taken by each symbol that successfully terminates.

8. A method according to claim 5, wherein the first order logic is a stochastic logic program having at least some clauses that are instrumented, the determining step in the analysing step being carried out by determining a path of said instrumented clauses through the first order logic that is taken by each symbol that successfully terminates.

9. A method according to any of claims 1 to 4, wherein:
the specification is codified into a Java program; and,
the symbols are analysed using the Java program to obtain patterns of the symbols by:
determining the execution path that is taken by each symbol through the Java program that successfully terminates, and
grouping the symbols according to said execution paths.

10. A method according to any of claims 1 to 9, wherein the symbols are messages of a computer language, said specification being the computer language, and wherein the codifying the specification into a set of computer-readable rules comprises defining computer-readable rules that describe the grammar of the computer language.

11. A method according to any of claims 1 to 9, wherein the symbols are data.

12. A method according to any of claims 1 to 11, comprising generalising the symbols by generalising to the paths.

13. A computer program for analysing symbols in a computer system, the symbols conforming to a specification for the symbols, the computer program comprising program instructions for causing a computer to carry out a method of:
codifying the specification into a set of computer-readable rules; and,
analysing the symbols using the computer-readable rules to obtains patterns of the symbols by:
determining the path that is taken by the symbols through the rules that successfully terminates, and
grouping the symbols according to said paths.

14. A computer program according to claim 13, wherein the computer program is arranged so that the method is carried out on new symbols to determine whether the new symbols fit a pattern of symbols that is known or constitute a new pattern.

15. A computer program according to claim 13 or claim 14, wherein the computer program is arranged so that the method is initially carried out on training examples of symbols.

16. A computer program according to any of claims 13 to 15, wherein the computer program is arranged so that it is determined to be sufficient to take only a single said path that successfully terminates.

17. A computer program according to any of claims 13 to 16, wherein the computer program is arranged so that:
the specification is codified by defining a first order logic that describes the specification; and,
the symbols are analysed using the first order logic to obtain patterns of the symbols by:
determining the path that is taken by each symbol through the first order logic that successfully terminates, and
grouping the symbols according to said paths.

18. A computer program according to claim 17, wherein the computer program is arranged so that the first order logic has clauses at least some of which are parameterised.

19. A computer program according to claim 18, wherein the computer program is arranged so that at least some of the clauses have a head that is parameterised, the determining step in the analysing step being carried out by determining a path of clauses having a parameterised head through the first order logic that is taken by each symbol that successfully terminates.

20. A computer program according to claim 17, wherein the computer program is arranged so that the first order logic is a stochastic logic program having at least some clauses that are instrumented, the determining step in the analysing step being carried out by determining a path of said instrumented clauses through the first order logic that is taken by each symbol that successfully terminates.

21. A computer program according to any of claims 13 to 16, wherein the computer program is arranged so that:
the specification is codified into a Java program; and,
the symbols are analysed using the Java program to obtain patterns of the symbols by:
determining the execution path that is taken by each symbol through the Java program that successfully terminates, and
grouping the symbols according to said execution paths.

22. A computer program according to any of claims 13 to 21, wherein the symbols are messages of a computer language, said specification being the computer language, and wherein the computer program is arranged so that the codifying the specification into a set of computer-readable rules comprises defining computer-readable rules that describe the grammar of the computer language.

23. A computer program according to any of claims 13 to 21, wherein the symbols are data.

24. A computer program according to any of claims 13 to 23, wherein the computer program is arranged so that the symbols are generalised by generalising to the paths.

25. A computer programmed to carry out a method according to any of claims 1 to 12.
